# EUROPÄISCHE PATENTSCHRIFT

(11) **EP 2 193 877 B1**
(45) Veröffentlichungstag und Bekanntmachung des Hinweises auf die Patenterteilung: **06.07.2011**
(21) Anmeldenummer: 09178023.9
(22) Anmeldetag: 04.12.2009
(51) Int. Cl.: B23Q 11/00

(54) **Bearbeitungsmaschine mit Absaugvorrichtung**
Processing machine with extraction device
Machine de traitement dotée d'un dispositif d'aspiration

(30) Priorität: 08.12.2008 DE 202008016254 U
(43) Veröffentlichungstag der Anmeldung: 09.06.2010
(73) Patentinhaber: Weeke Bohrsysteme GmbH, 33442 Herzebrock-Clarholz (DE)
(72) Erfinder: Voss, Hugo, 33449 Langenberg (DE); Heimann, Reinhard, 33332 Gütersloh (DE)
(74) Vertreter: HOFFMANN EITLE

(56) Entgegenhaltungen:
- EP-A1- 1 481 760
- EP-A2- 0 367 517

## Beschreibung

### Gebiet der Erfindung

Die vorliegende Erfindung betrifft eine Bearbeitungsmaschine mit einer Absaugvorrichtung zur Absaugung von in einer Bearbeitungsmaschine anfallenden Bearbeitungsrückständen wie beispielsweise Holzspänen. Eine derartige Maschine ist demnach zur Verarbeitung von Holz, Holzwerkstoffen, Kunststoffen, Leichtmetallen oder einer Kombination zweier oder mehrerer dieser Materialien geeignet. Entsprechend des Werkstoffs des jeweiligen Werkstücks und entsprechend der Art der Bearbeitung, also spanend oder nicht spanend, fallen während des Bearbeitungsvorgangs Rückstände an, die vom Werkstück selbst oder von weiteren zur Bearbeitung des Werkstücks verwendeten Materialien stammen. Die Absaugvorrichtung soll diese Rückstände vom Werkstück und/ oder dem Bearbeitungsbereich entfernen.

### Stand der Technik

Der Anmelderin ist eine Bearbeitungsmaschine bekannt, die mehrere Bearbeitungsaggregate zur spanenden Bearbeitung von Holzwerkstoffen oder ähnlichem aufweist. Dabei ist ein Hauptschlauch vorgesehen, der mit einer Absaugvorrichtung in Verbindung steht, und zur Bearbeitungsmaschine führt.

An der Bearbeitungsmaschine ist der Hauptschlauch an einem Verteilergehäuse angeschlossen, mit dem der Absaugluftstrom des Hauptschlauches einem Anschlussschlauch eines der Bearbeitungsaggregate zugeordnet werden kann. Auf diese Weise wird die Absaugung von Holzspänen oder Ähnlichem an einem in Betrieb befindlichen Bearbeitungsaggregat sichergestellt. Welcher der Anschlussschläuche mit dem Hauptschlauch in Verbindung steht, wird über einen Klappen- bzw. Umlenkmechanismus innerhalb des Verteilergehäuses bestimmt.

Dieser Aufbau hat jedoch den Nachteil, dass es zu Verlusten bei der Absaugleistung kommt. Dies liegt unter anderem darin begründet, dass der Luftstrom vom Hauptschlauch zum jeweiligen Anschlussschlauch nicht geradlinig geführt werden kann. Weiter lässt sich durch den Klappenmechanismus keine vollständige Abdichtung erzielen, da ebenfalls ein Verstellen der Klappenelemente sichergestellt werden muss. Weiter ist ein solcher Mechanismus relativ komplex aufgebaut.

Als ein Stand der Technik ist das Dokument EP 1 481 760 A1 bekannt, das eine Absaugvorrichtung für handbetätigte Werkzeuge betrifft. In einer Ausführungsform kennzeichnet sich die Absaugvorrichtung dadurch, dass wenigstens ein Schlauch der wenigstens einen Saugvorrichtung verschiebbar in oder an der Verbindungsvorrichtung angeordnet ist, und zwar derart, dass eine lösbare Verbindung zwischen jeweils zwei Schläuchen herstellbar ist.

Als weiterer Stand der Technik ist das Dokument EP 0 367 517 A2 bekannt, das eine Bearbeitungsmaschine mit einem in einer Richtung beweglichen Trägerelement und mit Bearbeitungsaggregaten betrifft.

### Inhalt der Erfindung

Die vorliegende Erfindung hat das Ziel, die oben genannten Probleme zu lösen, und bei geringem konstruktiven Aufwand eine Absaugvorrichtung bereitzustellen, mit welcher Verluste der Absaugleistung minimiert werden können.

Diese Ziele werden durch eine Bearbeitungsmaschine mit einer Absaugvorrichtung gemäß Schutzanspruch 1 erreicht. Weitere bevorzugte Ausführungsformen sind den abhängigen Ansprüchen zu entnehmen.

Grundgedanke der vorliegenden Erfindung ist es, den in einem Verteilergehäuse vorgesehenen Klappen- bzw. Umlenkmechanismus der Absaugvorrichtung gemäß dem Stand der Technik durch eine Absaugvorrichtung zu ersetzen, die einen auf einem Trägerelement verfahrbaren Hauptschlauch aufweist, der mit einem Anschlussschlauch in Verbindung gebracht werden kann, wobei der Anschlussschlauch wiederum mit dem im Betrieb befindlichen Bearbeitungsaggregat in Verbindung steht.

Es sei an dieser Stelle betont, dass unter die Bezeichnung "Schlauch" Bauformen mit steifer, oder auch flexibler Schlauchwand fallen. Die vorliegende Erfindung ist für verschiedene unter diesen Begriff fallende Strukturen umsetzbar. Entscheidend ist, dass ein von einer Wand umgebener Kanal für den Absaugluftstrom bereitgestellt wird.

Weiter sei angemerkt, dass unter die Bezeichnung "Bearbeitungsaggregat" verschiedenste Aggregate zur Bearbeitung von Werkstücken fallen. Beispielsweise können dies spanende Bearbeitungsaggregate wie Bohr-, Säge- oder Fräsaggregate sein. Jedoch sind auch Bearbeitungsaggregate zur nicht spanenden Bearbeitung denkbar.

Demnach wird eine erfindungsgemäße Bearbeitungsmaschine mit Absaugvorrichtung bereitgestellt, die aufweist: ein Trägerelement, ein am Trägerelement angebrachtes Bearbeitungsaggregat wie beispielsweise ein Fräs- und/oder Bohraggregat, und einen Hauptschlauch, wobei ein Ende des Hauptschlauchs mit einer ersten Seite des Trägerelements in Verbindung steht, sowie mehrere Anschlussschläuche, wobei jeweils ein Ende eines Anschlussschlauchs an einer weiteren Seite des Trägerelements angebracht ist, und sich zumindest ein Anschlussschlauch in fluidmäßigem Kontakt mit dem Hauptschlauch befindet.

Fluidmäßig bedeutet in diesem Zusammenhang, dass ein Absaugluftstrom zwischen Hauptschlauch und einem jeweiligen Anschlussschlauch hergestellt werden kann, die Schläuche aber nicht notwendigerweise direkt miteinander in Verbindung stehen müssen. Mit anderen Worten sind weitere Elemente zwischen diesen möglich.

Die erfindungsgemäße Absaugvorrichtung zeichnet sich dadurch aus, dass ein Ende des Hauptschlauchs entlang dem Trägerelement beweglich ist. Das Ende des Hauptschlauches ist dabei dasjenige, das nicht an einer Absaugvorrichtung angeschlossen ist, sondern dasjenige, das zum Trägerelement führt.

Durch diesen Aufbau kann auf einen Klappen- bzw. Umlenkmechanismus zum Verbinden eines Hauptschlauches mit einem Anschlussschlauch verzichtet werden. Es wird der Hauptschlauch zu einem jeweiligen Anschlussschlauch bewegt, und somit ein Absaugluftstrom zwischen Hauptschlauch und Anschlussschlauch hergestellt werden. Somit wird der Luftstrom direkt und unmittelbar vom Hautschlauch zum Anschlussschlauch geleitet. Der Luftstrom wird nicht umgelenkt, und Verluste wegen nicht absolut abgedichteter Stellen in einem Klappenmechanismus werden reduziert oder vermieden. Auf diese Weise wird der Wirkungsgrad der Absaugung stark verbessert. Auf diese Weise können Energiekosten der Absaugvorrichtung eingespart werden, oder es kann gar eine leistungsschwächere, kostengünstigere Absaugvorrichtung verwendet werden.

Weiter stellt die Verfahrbarkeit des Hauptschlauchs entlang dem Trägerelement eine relativ einfache konstruktive Lösung dar, weshalb durch die vorliegende Erfindung eine preiswerte Absaugvorrichtung bereitgestellt werden kann.

Gemäß der vorliegenden Erfindung kennzeichnet sich die Absaugvorrichtung durch ein Führungselement aus, welches das Trägerelement in einer ersten Richtung führen kann.

Gemäß einer bevorzugten Ausführungsform zeichnet sich die erfindungsgemäße Bearbeitungsmaschine mit Absaugvorrichtung dadurch aus, dass das Trägerelement eine Linearführung aufweist, um den Hauptschlauch zu führen. Der Hauptschlauch wird somit in einer Längsrichtung stufenlos verfahren, und kann mit einem jeweiligen Anschlussschlauch in Verbindung gebracht werden.

Weiter kann das am Trägerelement vorgesehene Bearbeitungsaggregat mit einem weiteren Ende des Anschlussschlauchs in Verbindung stehen. Beim Bearbeitungsaggregat kann es sich beispielsweise um ein Bohr- oder Fräsaggregat handeln. Der Anschlussschlauch ist derart am Bearbeitungsaggregat angebracht, dass Bearbeitungsrückstände unmittelbar während der Bearbeitung abgeführt werden können.

Gemäß einer weiteren Ausführungsform zeichnet sich die Bearbeitungsmaschine mit Absaugvorrichtung dadurch aus, dass das Bearbeitungsaggregat relativ zu Trägerelement beweglich ist. Bevorzugt ist diese Beweglichkeit in einer zweiten Richtung relativ zum Trägerelement vorgesehen.

Gemäß einer weiteren Ausführungsform zeichnet sich die Bearbeitungsmaschine mit Absaugvorrichtung dadurch aus, dass der Anschlussschlauch verlängerbar, insbesondere ausziehbar ist. Die Ausziehbarkeit kann beispielsweise durch einen teleskopartig verlängerbaren Anschlussschlauch vorgesehen sein. So ist der Anschlussschlauch im eingefahrenen Zustand platzsparend untergebracht, und kann je nach Bedarf in seiner Länge variiert werden. Wie bereits angesprochen fallen unter den Begriff des Schlauches Ansaugkanäle mit verschiedenen Eigenschaften, so auch flexible wie auch steife Schläuche. Beispielsweise kann ein Ansaugschlauch aus einem nicht biegbaren und im Wesentlichen nicht verformbaren Kunststoff gefertigt sein. Die Verlängerbarkeit/ Ausziehbarkeit eines Anschlussschlauches wird dann gemäß den jeweiligen Schlaucheigenschaften bestimmt. So kann sowohl ein steifer, als auch ein flexibler Anschlussschlauch teleskopartig verlängerbar sein.

Weiter wird es bevorzugt gesehen, dass sich der Hauptschlauch zumindest in der Nähe zum Trägerelement im Wesentlichen in einer zweiten Richtung erstreckt.

Darüber hinaus ist es bevorzugt, dass sich der Anschlussschlauch zumindest in der Nähe zum Trägerelement ebenfalls in einer zweiten Richtung erstreckt. Durch diese Anordnung kann ein im Wesentlichen in einer linearen Richtung verlaufender Luftstrom zwischen Hauptschlauch und Anschlussschlauch realisiert werden. Wegen fehlender Umlenkungen können die Reibungsverluste des Luftstroms innerhalb des Schlauchs reduziert werden, was sich wiederum positiv auf die zur Verfügung stehende Absaugleistung auswirkt.

Gemäß einer weiteren bevorzugten Ausführungsform ist es vorgesehen, dass sich der Hauptschlauch während des Absaugens zwischen den mehreren Anschlussschläuchen bewegen kann. Diese Bewegung des Hauptschlauchs kann motorisch oder pneumatisch erfolgen. Somit muss die Absaugung während eines Positionswechsels des Hauptschlauchs nicht abgestellt werden. Damit ist ein schneller Wechsel zwischen den verschiedenen Positionen des Hauptschlauches möglich. Dies bedeutet auch, dass ein schneller Wechsel zwischen den Bearbeitungsaggregaten möglich ist, wobei die Bearbeitungsaggregate mit einem jeweiligen Anschluss auch verbunden sind.

### Kurze Beschreibung der Zeichnungen

Nachfolgend wird anhand einer beispielhaften Ausführungsform der Grundgedanke der vorliegenden Erfindung erläutert.
- Fig. 1: ist eine perspektivische Ansicht einer Absaugvorrichtung gemäß der vorliegenden Erfindung.

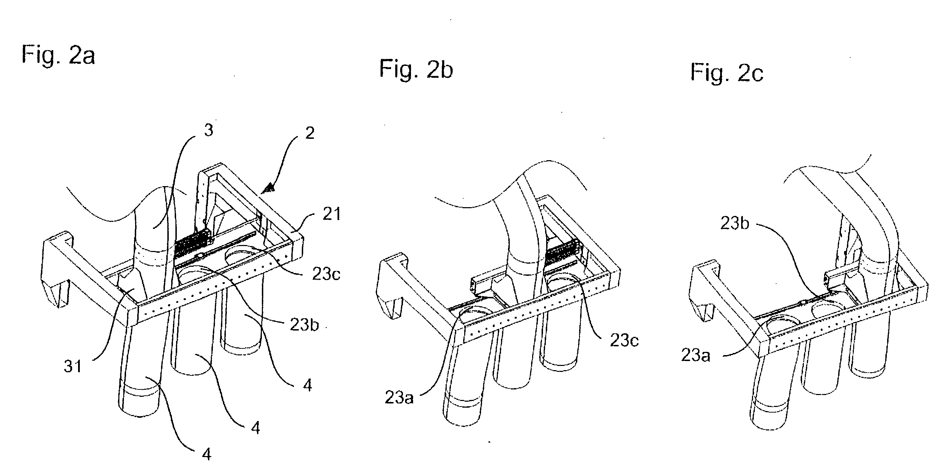

- Fig. 2a, 2b und 2c: zeigen unterschiedliche Stellungen des Hauptschlauchs in Relation zu den Anschlussschläuchen.

### Ausführliche Beschreibung bevorzugter Ausführungsformen

Bevorzugte Ausführungsformen der vorliegenden Erfindung werden nachfolgend unter Bezugnahme auf die begleitenden Figuren beschrieben.

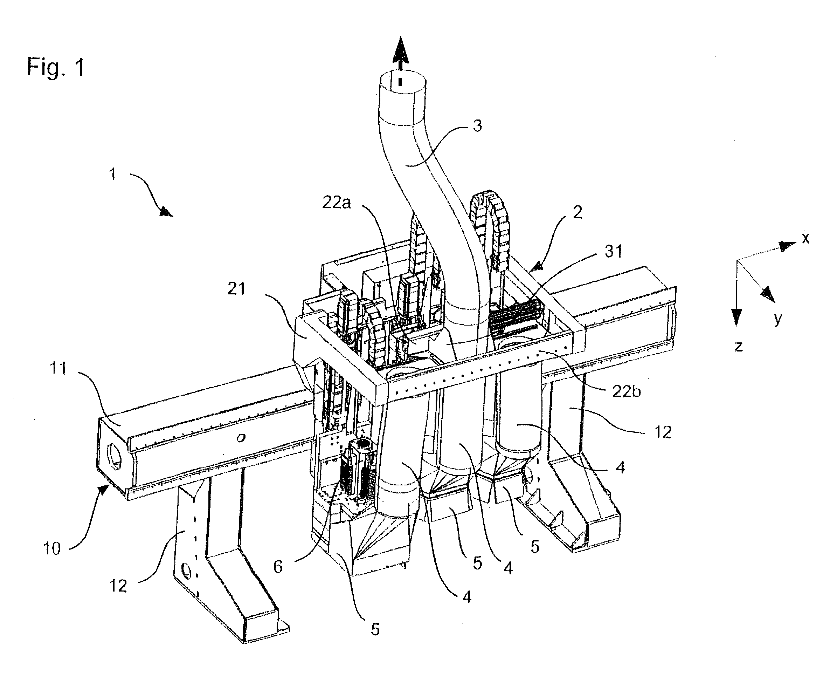

Dabei stellt Figur 1 eine perspektivische Ansicht einer erfindungsgemäßen Bearbeitungsmaschine 1 mit einer Absaugvorrichtung dar. Die Bearbeitungsmaschine 1 weist ein Trägerelement 2 auf, welches wiederum einen Rahmen 21 umfasst. Am Rahmen 21 sind Linearführungen 22a, 22b vorgesehen, welche sich in einer horizontalen Richtung (x-Richtung) erstrecken. Mittels der Linearführungen 22a, 22b wird ein beweglicher Anschluss 31 eines in Figur 1 in einer mittleren Position dargestellten Hauptschlauches 3 geführt, so dass sich der bewegliche Anschluss 31 entlang der X-Richtung bewegen kann.

Der Anschlusses 31 kann mechanisch, aber auch pneumatisch bewegt werden. Der Hauptschlauch 3 wiederum ist mit einer Absaugvorrichtung (nicht dargestellt) verbunden, um einen Absaugluftstrom durch den Hauptschlauch 3 zu erzeugen. Die Richtung des Absaugluftstromes ist in Fig. 1 mit einem Pfeil angedeutet. Dabei sei betont, dass die Bewegung des Anschlusses 31 auch dann möglich, wenn durch den Hauptschlauch 3 Luft angesaugt wird.

Am Trägerelement 2 sind in der Nähe der Linearführungen 22a, 22b insgesamt drei Anbringungen für Anschlussschläuche 4 vorgesehen, nämlich eine Anbringung für einen linken Anschlussschlauch 23a, eine Anbringung für einen mittleren Anschlussschlauch 23b, und eine Anbringung für einen rechten Anschlussschlauch 23c.

Diese Anbringungen 23a, 23b, 23c sind in einer der Erstreckungsrichtung der Linearführungen entsprechenden, horizontalen Richtung angeordnet (x-Richtung). Die Anbringungen 23a, 23b, 23c weisen jeweils eine kreisförmige Gestalt auf, um einen im Querschnitt im Wesentlichen runden Anschlussschlauch 4 daran zu befestigen. Somit kann ein entsprechender Anschlussschlauch an einer Anbringung 23a, 23b, 23c befestigt werden, so dass die Zylinderachse in einer im Wesentlichen vertikalen Richtung erstreckt (z-Richtung).

Durch die beschriebene Anordnung kann der bewegliche Anschluss 31 des Hauptschlauches 3 in der x-Richtung zwischen denn Anbringungen 23a, 23b und 23c eines jeweiligen Anschlussschlauches 4 verfahren werden, wodurch die sich in einer vertikalen Richtung erstreckenden Schläuche, also der Hauptschlauch 3 und der jeweilige Anschlussschlauch 4, in einen fluidmäßigen Kontakt gebracht werden können.

Das Trägerelement 2 ist mit einem einen Längsträger 11 aufweisenden Führungselement 10 verbunden, genauer gesagt mit dem sich in einer x-Richtung erstreckenden Längsträger 11. Der Längsträger 11 wiederum wird durch zwei Ständer 12 gestützt, die an einem nicht dargestellten Maschinenbett angebracht sind. Alternativ zur beschriebenen Portalbauweise kann das Führungselement auch als Ausleger ausgeführt sein.

An den Anbringungen 23a, 23b und 23c sind die Anschlussschläuche 4 wie zuvor beschrieben befestigt. Jeder dieser Anschlussschläuche 4 ist verlängerbar, genauer gesagt ausziehbar. Der in Figur 1 dargestellte linke Anschlussschlauch 4 ist verlängert dargestellt, während sich die beiden weiteren Anschlussschläuche 4 in einem Grundzustand (nicht verlängerten Zustand) befinden.

Am unteren Ende ist jeder der Anschlussschläuche 4 mit einem Bearbeitungsaggregat 5 in Verbindung. Im vorliegenden Beispiel ist das linke Bearbeitungsaggregat 5 ein Bohraggregat, während die beiden weiteren Bearbeitungsaggregate 5 Fräsaggregate sind. An jedem Bearbeitungsaggregat 5 ist ein Antrieb 6 vorgesehen, um das jeweilige Werkzeug zu betreiben.

In diesem Zusammenhang sei angemerkt, dass in Figur 1 das linke Bearbeitungsaggregat in einer Betriebsstellung gezeigt ist. Der Hauptschlauch 3 ist einer mittleren Stellung gezeigt. Somit findet in der dargestellten Situation nicht unmittelbar eine Absaugung bei gleichzeitiger Bearbeitung eines Werkstückes statt. Um dies zu erreichen, muss z.B. der Hauptschlauch 3 in die linke Position verfahren werden, so dass sich der Hauptschlauch 3 und der linke Anschlussschlauch 4, der mit dem in der Betriebsstellung befindlichen linken Bearbeitungsaggregat 5 verbunden ist, in einem fluidmäßigen Kontakt befinden.

Im Betrieb ist die Absaugvorrichtung somit fölgendermaßen beweglich: zum einen kann das Trägerelement 2 entlang des Längsträgers 11 in einer horizontalen Richtung (x-Richtung) bewegt werden. Die einzeln zuschaltbaren Bearbeitungsaggregate 5 wiederum sind relativ vom Trägerelement 2 in einer senkrechten Richtung(z-Richtung) beweglich. In Figur 1 beispielsweise ist das linke Bearbeitungsaggregat 5 in einer Arbeitsstellung gezeigt und gegenüber den beiden weiteren Bearbeitungsaggregaten 5 in einer vertikalen Richtung (z-Richtung) abgesenkt.

Zur Bearbeitung eines Werkstücks wird ein jeweiliges Bearbeitungsaggregat 5 wie beschrieben zugeschaltet und bewegt, und ein nicht dargestelltes Werkzeug dieses Bearbeitungsaggregats kann relativ zum Werkstück zugestellt werden. Die Absaugung der Bearbeitungsrückstände wird über den zum jeweiligen Anschlussschlauch 4 beweglichen Hauptschlauch 3 sichergestellt.

An dieser Stelle sei betont, dass das vorliegende Ausführungsbeispiel drei Bearbeitungsaggregate, und somit insgesamt drei Anschlussschläuche 4 aufweist. Jedoch sind auch zwei oder mehr als drei Bearbeitungsaggregate 5 sowie entsprechende Anschlussschläuche 4 denkbar, ohne vom erfinderischen Gedanken abzuweichen.

Auch ist es möglich, einen weiteren Aufsatz zwischen dem beweglichen Anschluss 31 des Hauptschlauchs 3 und den Anschlussschläuchen vorzusehen, so dass nicht nur ein Anschlussschlauch 4, sondern mehrere Anschlussschläuche 4 während der Bearbeitung mit dem Hauptschlauch 3 in Verbindung stehen. Auf diese Weise können mehrere Bearbeitungsaggregate 5 gleichzeitig Bearbeitungen durchführen, weil gleichzeitig eine Absaugung der Bearbeitungsrückstände gewährleistet ist.

Auch wenn die in dieser Ausführungsform dargestellte Absaugung einen Luftstrom mittels des Anschlussschlauches und des Hauptschlauches in einer vertikalen Richtung führt, so ist diese vertikale Ausrichtung der Schläuche auch anders realisierbar. Beispielsweise können sowohl der Hauptschlauch als auch die Anschlussschläuche in einer vertikalen Richtung ausgerichtet sein, oder einer der Schläuche in einer vertikalen Richtung, und der andere Schlauch/ die anderen Schläuche in einer horizontalen (kombinierte Ausrichtung). Bei einer horizontalen Ausrichtung der Schläuche, also des Hauptschlauchs und der Anschlussschläuche, kann man auch von einer liegenden Absaugung sprechen.

Gegenstand der Erfindung ist eine Bearbeitungsmaschine mit Absaugvorrichtung. Es sei jedoch angemerkt, dass während der Absaugung nicht notwendigerweise ein Werkstück bearbeitet werden muss. Auch ohne Bearbeitung kann die Absaugvorrichtung verwendet werden, um z.B. noch vorhandene Bearbeitungsrückstände von einem Werkstück oder vom Bearbeitungsbereich abzusaugen.

## Patentansprüche

1. Bearbeitungsmaschine (1) mit Absaugvorrichtung zur Absaugung von in der Bearbeitungsmaschine anfallenden Bearbeitungsrückständen wie Holzspänen, wobei die Bearbeitungsmaschine aufweist:
ein Trägerelement (2),
ein am Trägerelement angebrachtes Bearbeitungsaggregat (5),
einen Hauptschlauch (3), wobei ein Ende des Hauptschlauchs (3) mit einer ersten Seite des Trägerelements (2) in Verbindung steht,
mehrere Anschlussschläuche (4), wobei jeweils ein Ende eines Anschlussschlauchs (4) an einer weiteren Seite des Trägerelements (2) angebracht ist, und sich einer der Anschlussschläuche (4) in fluidmäßigem Kontakt mit dem Hauptschlauch (3) befinden kann,
die Bearbeitungsmaschine (1) weiter ein Führungselement (10) aufweist, das eingerichtet ist, das Trägerelement (2) in einer ersten Richtung (x) zu führen,
**dadurch gekennzeichnet, dass**
ein mit dem Trägerelement verbundenes Ende des Hauptschlauchs (3) entlang dem Trägerelement (2) beweglich ist.

2. Bearbeitungsmaschine (1) mit Absaugvorrichtung gemäß Anspruch 1, **dadurch gekennzeichnet, dass** das Trägerelement (2) eine Linearführung (22a, 22b) aufweist, um den Hauptschlauch (3) zu führen.

3. Bearbeitungsmaschine (1) mit Absaugvorrichtung gemäß einem der vorangegangenen Ansprüche, **dadurch gekennzeichnet, dass** am Trägerelement (2) ein Bearbeitungsaggregat (5), insbesondere ein Bohr- und/oder Fräsaggregat, vorgesehen ist, das mit einem weiteren Ende des Anschlussschlauchs (4) in Verbindung steht.

4. Bearbeitungsmaschine (1) mit Absaugvorrichtung gemäß Anspruch 3, **dadurch gekennzeichnet, dass** das Bearbeitungsaggregat (5) relativ zum Trägerelement (2) beweglich ist.

5. Bearbeitungsmaschine (1) mit Absaugvorrichtung gemäß Anspruch 3 oder 4, **dadurch gekennzeichnet, dass** das Bearbeitungsaggregat (5) in einer zweiten Richtung (z) relativ zum Trägerelement (2) beweglich ist.

6. Bearbeitungsmaschine (1) mit Absaugvorrichtung gemäß einem der vorangegangenen Ansprüche, **dadurch gekennzeichnet, dass** der Anschlussschlauch (4) verlängerbar, insbesondere ausziehbar, ist.

7. Bearbeitungsmaschine (1) mit Absaugvorrichtung gemäß einem der vorangegangenen Ansprüche, **dadurch gekennzeichnet, dass** sich der Hauptschlauch (3) zumindest in der Nähe zum Trägerelement (2) im Wesentlichen in einer zweiten Richtung (z) erstreckt, und **dadurch gekennzeichnet, dass** sich der Anschlussschlauch (4) zumindest in der Nähe zum Trägerelement (2) in einer zweiten Richtung (z) erstreckt.

8. Bearbeitungsmaschine (1) mit Absaugvorrichtung gemäß Anspruch 7, **dadurch gekennzeichnet, dass** die zweite Richtung (z) eine vertikale Richtung ist.

9. Bearbeitungsmaschine (1) mit Absaugvorrichtung gemäß einem der vorangegangenen Ansprüche, **dadurch gekennzeichnet, dass** der Hauptschlauch (3) während des Absaugens zwischen den mehreren Anschlussschläuchen (4) verfahren werden kann.

## Claims

1. Processing machine (1) with exhaust system for the exhaustion of processing residues, such as wood chips, occurring in the processing machine, wherein the processing machine has:
a support element (2),
a processing unit (5) attached to the support element,
a main hose (3), wherein one end of the main hose (3) is connected to a first side of the support element (2),
several connecting hoses (4), wherein in each case one end of a connecting hose (4) is attached to a further side of the support element (2), and one of the connecting hoses (4) may be in fluid-wise contact with the main hose (3),
the processing machine (1) also has a guide element (10) which is equipped to guide the support element (2) in a first direction (x),
**characterised in that**
one end of the main hose (3) connected to the support element can be moved along the support element (2).

2. Processing machine (1) with exhaust system according to claim 1, **characterised in that** the support element (2) has a linear guide (22a, 22b) to guide the main hose (3).

3. Processing machine (1) with exhaust system according to one of the preceding claims, **characterised in that** a processing unit (5), in particular a boring and/or milling unit, is provided on the support element (2) and is connected to a further end of the connecting hose (4).

4. Processing machine (1) with exhaust system according to claim 3, **characterised in that** the processing unit (5) can be moved relative to the support element (2).

5. Processing machine (1) with exhaust system according to claim 3 or 4, **characterised in that** the processing unit (5) can be moved in a second direction (z) relative to the support element (2).

6. Processing machine (1) with exhaust system according to one of the preceding claims, **characterised in that** the connecting hose (4) can be extended, in particular can be pulled out.

7. Processing machine (1) with exhaust system according to one of the preceding claims, **characterised in that** the main hose (3) extends essentially in a second direction (z) at least in the vicinity of the support element (2), and **characterised in that** the connecting hose (4) extends in a second direction (z) at least in the vicinity of the support element (2).

8. Processing machine (1) with exhaust system according to claim 7, **characterised in that** the second direction (z) is a vertical direction.

9. Processing machine (1) with exhaust system according to one of the preceding claims, **characterised in that** the main hose (3) may be moved between the several connecting hoses (4) during the exhaustion.

## Revendications

1. Machine de traitement (1) dotée d'un dispositif d'aspiration, pour aspirer des résidus d'usinage survenant dans la machine de traitement, tels que des copeaux de bois, la machine de traitement présentant :
un élément support (2),
un agrégat d'usinage (5) monté sur l'élément support,
un tuyau principal (3), une extrémité du tuyau principal (3) étant reliée à un premier côté de l'élément support (2),
une pluralité de tuyaux de raccordement (4), chaque fois une extrémité d'un tuyau de raccordement (4) étant montée sur un autre côté de l'élément support (2), et l'un des tuyaux de raccordement (4) pouvant se trouver en contact fluidique avec le tuyau principal (3),
la machine de traitement (1) présentant en outre un élément de guidage (10), agencé pour guider l'élément support (2) dans une première direction (x),
**caractérisée en ce qu'**
une extrémité, reliée à l'élément support, du tuyau principal (3) est déplaçable le long de l'élément support (2).

2. Machine de traitement (1) dotée d'un dispositif d'aspiration selon la revendication 1, **caractérisée en ce que** l'élément support (2) présente un guidage linéaire (22a, 22b), pour guider le tuyau principal (3).

3. Machine de traitement (1) dotée d'un dispositif d'aspiration selon l'une des revendications précédentes, **caractérisée en ce que**, sur l'élément support (2), est prévu un agrégat d'usinage (5), en particulier un agrégat de perçage et/ou de fraisage, relié à une autre extrémité du tuyau de raccordement (4).

4. Machine de traitement (1) dotée d'un dispositif d'aspiration selon la revendication 3, **caractérisée en ce que** l'agrégat d'usinage (5) est mobile par rapport à l'élément support (2).

5. Machine de traitement (1) dotée d'un dispositif d'aspiration selon la revendication 3 ou 4, **caractérisée en ce que** l'agrégat d'usinage (5) est mobile, dans une deuxième direction (z), par rapport à l'élément support (2).

6. Machine de traitement (1) dotée d'un dispositif d'aspiration selon l'une des revendications précédentes, **caractérisée en ce que** le tuyau de raccordement (4) est susceptible d'être prolongé, en particulier susceptible d'être déployé de manière télescopique.

7. Machine de traitement (1) dotée d'un dispositif d'aspiration selon l'une des revendications précédentes, **caractérisée en ce que**, au moins à proximité de l'élément support (2), le tuyau principal (3) s'étend essentiellement dans une deuxième direction (z), et **caractérisée en ce que**, au moins à proximité de l'élément support (2), le tuyau de raccordement (4) s'étend dans une deuxième direction (z).

8. Machine de traitement (1) dotée d'un dispositif d'aspiration selon la revendication 7, **caractérisée en ce que** la deuxième direction (z) est une direction verticale.

9. Machine de traitement (1) dotée d'un dispositif d'aspiration selon l'une des revendications précédentes, **caractérisée en ce que** le tuyau principal (3) peut être déplacé entre la pluralité de tuyaux de raccordement (4) pendant l'aspiration.
